# EUROPÄISCHE PATENTSCHRIFT

(11) **EP 2 219 768 B1**
(45) Veröffentlichungstag und Bekanntmachung des Hinweises auf die Patenterteilung: **26.09.2012**
(21) Anmeldenummer: 08858241.6
(22) Anmeldetag: 05.12.2008
(51) Int. Cl.: B01F 3/08, B01F 3/10, B01F 5/06, B01F 7/00, B01F 13/10, B01F 15/00, B01F 15/02, B05C 17/005, B05C 17/01

(54) **MISCHEINRICHTUNG ZUM VERMISCHEN VON KOMPONENTEN VISKOSER MEDIEN SOWIE DARAUF BEZOGENER MISCHVORSATZ UND SYSTEM**
MIXING DEVICE FOR MIXING COMPONENTS OF VISCOUS MEDIA, AND RELATED MIXING ATTACHMENT AND SYSTEM
APPAREIL DE MÉLANGE POUR MÉLANGER LES COMPOSANTS DES MATÉRIAUX VISQUEUX, ET ADAPTATEUR DE MÉLANGE ET SYSTEME CORRESPONDANTS

(30) Priorität: 07.12.2007 DE 102007059078; 13.02.2008 DE 102008008852; 13.02.2008 DE 102008008964; 20.10.2008 DE 102008052121
(43) Veröffentlichungstag der Anmeldung: 25.08.2010
(73) Patentinhaber: Reinhardt - Technik GmbH, 58566 Kierspe (DE)
(72) Erfinder: KLEINDIENST, Oliver, 40880 Ratingen (DE); PRICK, Thomas, 42115 Wuppertal (DE)
(74) Vertreter: Dörner, Kötter & Kollegen
(86) Internationale Anmeldenummer: PCT/EP2008/010350
(87) Internationale Veröffentlichungsnummer: WO 2009/071318

(56) Entgegenhaltungen:
- EP-A- 0 291 820
- EP-A- 1 892 033
- DE-A1- 2 809 228
- DE-A1- 4 332 192
- DE-A1-102004 055 072
- GB-A- 2 299 522
- JP-A- 3 071 809

## Beschreibung

Die Erfindung betrifft eine Mischeinrichtung zum Vermischen mehrerer Komponenten viskoser Medien, umfassend zumindest ein von den Komponenten durchströmbares Mischgehäuse mit zumindest zwei Komponentenanschlüssen und mit zumindest einer Austrittsöffnung für die miteinander vermischten Komponenten,
einen Mischvorsatz für Hochdruckmisch- und/oder Dosieranlagen mit zumindest einer Mischeinrichtung,
sowie ein System zum Vermischen von Komponenten.

Die Mischeinrichtung ist insbesondere zum Mischen solcher reaktiver viskoser Medien vorgesehen, die aus einer Basiskomponente und einer zweiten Komponente, beispielsweise einem Härter oder einem Katalysator bestehen, wie beispielsweise Siliconen, Epoxiden, Polyurethanen oder ähnlichen Kunststoffen. Insbesondere beim Fenster- und Fassadenbau, bei der Isolierglasfertigung und in vielen Bereichen der Versiegelungs- und Klebetechnik werden derartige reaktive, viskose Medien häufig aus Großgebinden entnommen und beispielsweise mittels Pumpeinrichtungen über separate Leitungen zu einem Verbraucher geführt. Dabei werden die einzelnen Komponenten kurz vor dem Verbraucher, beispielsweise kurz vor einer Ausgabeeinrichtung in einer statischen Mischstrecke zusammengeführt. Im einfachsten Fall kann dies beispielsweise ein Mischrohr mit statischen Mischeinbauten sein. Um eine hinlängliche Vermischung der Komponenten zu erzielen, müssen die Mischstrecken eine entsprechende Länge aufweisen.

Solche Mischstrecken mit statischen Mischeinbauten sind mit dem Nachteil behaftet, dass bei Beendigung oder Unterbrechung der Ausgabe des gemischten Mediums eine Reinigung bzw. Spülung der Mischstrecke erforderlich ist. Dies wird üblicherweise so durchgeführt, dass die Härter- und/oder Katalysatorkomponente der Mischung gesperrt wird und die Basiskomponente so lange durch die Mischstrecke gepumpt wird, bis sich kein reaktionsfähiges Medium mehr in der Mischstrecke befindet. Bei Wiederinbetriebnahme der Ausgabevorrichtung ist dann eine weitere Spülung der Mischstrecke so lange erforderlich, bis das gesamte Volumen der Mischstrecke nur mit reaktionsfähigem Material gefüllt ist. Das beim Spülen der Mischstrecke anfallende Material ist nicht verwertbar und fällt folglich als Abfall an. Hieraus ergeben sich große Materialverluste, darüber hinaus muss das beim Spülen anfallende überschüssige Material als Sondermüll entsorgt werden.

Schließlich erfordert das Spülen der Mischstrecke einen erheblichen Zeitbedarf, der ebenfalls nicht wünschenswert ist.

Eine dynamische Mischeinrichtung ist beispielsweise aus der DE 20 2005 000 042 U1 bekannt. Die Mischeinrichtung ist eine Einkammermischeinrichtung zum Mischen tixotroper 2-Komponenten Kleb- und Dichtstoffe, bei der in einem Kunststoffgehäuse ein mehrflügeliger Rotationskörper diese vermischt. Die Mischeinrichtung weist keine materialfördemde Wirkung durch die Rotationsbewegung des Rotationskörpers auf.

Aus der WO 2007/041878 A1 ist eine weitere dynamische Mischeinrichtung zum Mischen von Komponenten mit unterschiedlichen Volumina bekannt, bei der ein Rotorgehäuse mit einem Mischerrotor und mit einem Verschlussdeckel an der Einlassseite versehen ist. Es sind Mischblätter an dem Rotor vorgesehen, die im Wesentlichen rhombusförmig sind. 90° versetzt zu diesen Mischblättem sind an dem Rotor weitere Mischblätter vorgesehen, die entweder ebenfalls rhombenförmig sind oder rechteckig bzw. quaderförmig. Das Gehäuse der Mischeinrichtung umfasst eine Mischkammer und eine Nach-Mischkammer, wobei eine Abtrennung voneinander durch ein Plattenteil gebildet wird, das an dem Rotor befestigt und oberhalb der Mischblätter angeordnet ist. Die Mischblätter sind in der Nach-Mischkammer angeordnet.

Die DE 20 2007 002 806 U1 offenbart eine Mischvorrichtung zum Vermischen von zumindest zwei Komponenten zur Herstellung einer gebrauchsfertigen Spachtelmasse. Die Mischvorrichtung umfasst einen hohlzylindrischen Statorteil und einen konzentrisch um eine Längsachse drehbar aufgenommen Rotorteil, wobei zwischen den Eintrittsöffnungen und der Abgabeöffnung eine Mischkammer vorgesehen und ringspaltartig ausgebildet ist. Am Statorteil sind mehrere erste Mischzähne radial nach innen angeformt und am Rotorteil sind radial nach außen in die Mischkammer hinein sich erstreckende zweite Mischzähne ausgebildet.

Aus der DE 10 2005 054 153 A1 ist ein Dynamikmischer bekannt mit einem Mischrohr und einer extern angetriebenen Mischerwelle. Zwischen Mischpaddeln sind verstellbare Schraubenschikanen vorgesehen, die in Zusammenwirken die Mischqualität steigern sollen.

Die DE 100 19 893 C2 offenbart einen dynamischen Mischer mit einer Basisplatte mit nicht kreisförmigen Einlassöffnungen und einer Öffnung für die Antriebswelle und mit einem Rotor, an dem Mischflügel vorgesehen sind, ebenso wie eine Formnut zur Aufnahme der Antriebswelle und mit einem Gehäuse, in dem der Rotor läuft.

Die DE 43 32 192 A1 offenbart eine Mischpistole für den Austrag verschiedener Medien, insbesondere von Gemischen reaktiver Mehrkomponenten-Materialien. Sie weist eine oder mehrere Ventileinheiten für die Zuführung jeweils einer Komponente und eine weitere Ventileinheit für ein Reinigungsmedium auf. Die Ventileinheiten sind mit einer Mischkammer verbunden, in welcher ein gesondert antreibbarer Mischrotor angeordnet ist und aus welcher das Gemisch über ein Mischrohr austritt. Die Mischkammer ist unterteilt in eine Vorkammer und einen Mischraum mittels einer Sperrscheibe, die ein oder mehrere Durchgangslöcher aufweist. Im Inneren der Mischkammer ist ein Paket aus drehfest mit einem abgeflachten Wellenabschnitt der Rotorwelle verbundenen Rotorscheiben und dazwischen angeordneten gehäusefesten Statorscheiben angeordnet. Die Rotorscheiben weisen an ihrem Außenumfang jeweils einen deutlichen Ringspalt zur Umfangswandung der Mischkammer auf, der Außendurchmesser der Statorscheiben entspricht nahezu dem Durchmesser der Umfangsfläche des Mischraums. Die Statorscheibe weist eine zentrale Bohrung auf, durch die das Medium hindurchströmt, wonach es durch die benachbarte Rotorscheibe wiederum in radialer Richtung nach außen umgelenkt wird.

Die GB 2 299 522 A offenbart einen mehrstufigen Turbomixer mit einem Gehäuse mit radialen Einlass und tangentialen Einlässen an einem Ende und einem tangentialen Auslass an dem anderen Ende. Das mehrstufige Turbinenrad enthält Einlass- und Auslass-Turbinenräder und ein Zwischenturbinenrad. Statische Platten mit Öffnungen sind zwischen den Turbinenrädern angeordnet.

Die DE 28 09 228 A1 offenbart eine Vorrichtung zum Dosieren und Vermischen von Mehrkomponentenmitteln, wobei eine mit einem Gehäuse verbundene, in mehrere Kammerabschnitte und ein Abschlussstück zerlegbare Kammer vorgesehen ist, deren Abschnitte jeweils an einem Ende eine Lochplatte aufweisen, einen in der Kammer angeordneten zerlegbaren Schneckenförderer, eine die Kammerabschnitte mit dem Gehäuse lösbar verbindende Überwurfhülse sowie ein Antriebsaggregat.

Die EP 0291820 A1 offenbart einen Mischer zum Vermischen zumindest zweier fließfähiger Stoffe, insbesondere unter Durchführung bzw. Einleitung einer Reaktion während der Vermischung. Um bei Erzeugen zur Klumpenbildung neigender Stoffe eine Verbesserung hinsichtlich der Vermeidung solcher Klumpenbildungen, Verstopfungen und Anbackungen zu schaffen, ist ein Einlass axial zu einer mit zumindest einer Statorscheiben-Rotorscheiben-Einheit besetzten Welle vorgesehen. Ein weiterer Einlass für zumindest einen weiteren Stoff ist mit Abstand davon angeordnet. Dieser mündet direkt gegen die Rotorscheibe.

Gemischte Komponenten bzw. Medien können über eine Auspressvorrichtung abgegeben werden. Auspressvorrichtungen sind insbesondere zum Auspressen von Folienbeuteln mit reaktiven, viskosen Medien, die aus einer Basiskomponente und einer zweiten Komponente, beispielsweise einem Härter oder einem Katalysator bestehen, wie vorstehend beispielhaft angeführt, vorgesehen. Solange 2-Komponenten-Kleb- und -Dichtstoff in großen Mengen kontinuierlich verarbeitet werden, können diese Medien aus Großgebinden mit stationären Mischanlagen entnommen werden. Solche Großgebinde sind beispielsweise Fässer mit einem Fassungsvermögen von etwa 250 kg oder 25 kg. Das Vermischen der Komponenten findet in einem sog. Trompeten- oder Alphamischer statt. Solche Mischer sind statische Mischer, bei denen mittels in Stahlrohren eingefasster Mischseelen eine Vermischung erfolgt. Die Komponenten werden durch die Geometrie der Mischseelen und die Bewegungsenergie der durchfließenden Komponenten vermischt.

Sollen jedoch kleine Menge verarbeitet werden, muss häufig auf Kartuschen zurückgegriffen werden, die die zu vermischenden Komponenten separat bereitstellen. Manuelles Mischen und Dosieren ist erforderlich, was umständlich ist. Insbesondere kann die Dosierung bei Anwendung von Kartuschen nur unzureichend kontrolliert werden, was unter Umständen dazu führt, dass fehlerhaft dosierte Mischungen bei der Verklebung auf Baustellen verwendet werden. Schließlich sind stationäre Anlagen häufig für die Verwendung auf Baustellen, in welchen in mehreren Stockwerken gearbeitet wird, ungeeignet. Fässer und Mischvorrichtungen müssen beispielsweise mittels Kran von Stockwerk zu Stockwerk verlegt werden, was außerordentlich aufwendig ist.

Ferner ergibt sich bei Arbeitsunterbrechungen, die länger andauern als die von den Herstellern angegebenen Verarbeitungszeiten bei den statischen Mischern das Problem, dass diese mit der Basiskomponente so lange durchspült werden müssen, bis sich nur noch die Basiskomponente in dem Mischer befindet. Für einen solchen Spülvorgang sind etwa 2,5 kg Basiskomponente erforderlich, die nach dem Spülvorgang als Sondermüll entsorgt werden müssen. Alternativ ist ein sog. Freezer bekannt, mittels dessen der gesamte Mischer bei einer Temperatur von -40 °C eingefroren wird. Hierdurch wird die Reaktion um maximal 90 min verzögert. Nach dem Einfrieren muss der Mischer wiederum aufgetaut werden, was mit einem hohen Zeitaufwand verbunden ist. Wird eine Einfrierzeit von etwa 90 min überschritten, härtet das Material zwar nicht aus, wird jedoch unbrauchbar und muss daher als Abfall entsorgt werden. Maximale für den Mischer verträgliche Einfrierzeiten liegen bei 48 Std.. Werden diese überschritten, wird der Mischer unbrauchbar und muss ersetzt werden.

Ausgabe- oder Mischvorrichtungen für Zwei-Komponenten-Klebstoffe, Dichtmassen oder dergleichen sind in vielen Fällen Hochdruckanwendungen. Diesen Mischvorrichtungen oder Ausgabevorrichtungen werden die zu mischenden oder auszugebenden Komponenten mittels Hochdruckschläuchen zugeführt. Solche Hochdruckschläuche sind unter Mediendruck verhältnismäßig steif. Hochdruckschläuche, die beispielsweise für Drücke bis zu 400 bar ausgelegt sind, sind bereits ohne Betriebsdruck schwer zu handhaben. Bei anstehendem Mediendruck wird die Beweglichkeit eines etwa an die Schläuche angeschlossenen Verbrauchers jedoch stark eingeschränkt. Um solche Verbindungen zwischen Verbraucher und der Materialquelle beweglicher zu gestalten, ist es bekannt, Gelenkverbinder in Hochdruckschläuchen vorzusehen. Solche Gelenkverbinder sind im einfachsten Falle gelenkig miteinander verbundene Anschlussfittinge, in welchen das diese durchströmende Medium etwa um 90° abgelenkt wird. Solche Anschlussfittinge sind üblicherweise in jeder Leitung von der Quelle zum Verbraucher vorgesehen. Diese Anordnung ist verhältnismäßig aufwändig und darüber hinaus mit dem Nachteil behaftet, dass mehrere parallel zueinander in einer gemeinsamen Knickstelle der Leitungen angeordnete Gelenkverbinder sich gegenseitig in der Beweglichkeit einschränken, zumal die Gelenkverbinder üblicherweise mehr Volumen beanspruchen als eine Leitung ohne Anschlussfittinge.

Der Erfindung liegt daher die Aufgabe zugrunde, eine Mischeinrichtung zum Vermischen mehrerer reaktiver Komponenten viskoser Medien, wie beispielsweise Silicon und Härter bereitzustellen, mit welcher eine effektive Vermischung mehrerer Komponenten bei einem verhältnismäßig geringen Anfall an Materialausschuss bzw. Materialüberschuss möglich ist. Der Erfindung liegt ferner die Aufgabe zugrunde, ein mobiles System zum Bereitstellen mehrerer Komponenten und zum Mischen mehrerer Komponenten viskoser Medien bereitzustellen, welches die zuvor erwähnten Nachteile nicht aufweist. Ebenso liegt der Erfindung die Aufgabe zugrunde, die Nachteile der stationären Hochdruckmisch- und/oder Dosieranlagen zu beheben.

Die Aufgabe wird gelöst durch eine Mischeinrichtung zum Vermischen mehrerer Komponenten viskoser Medien, mit den Merkmalen des Patentanspruchs 1.

Für einen Mischvorsatz zum dynamischem Vermischen zumindest zweier miteinander zu mischender Komponenten viskoser Medien für eine Hochdruckmisch- und/oder Dosieranlage wird die Aufgabe dadurch gelöst, dass diese eine der Anzahl von Komponenten entsprechende Anzahl von Mengensteuerventilen, mit diesen verbundene Zuleistungskanäle sowie zumindest eine dynamische Mischeinrichtung, wie sie vorstehend genannt ist, zum gebrauchsfertigen Mischen der Komponenten umfasst, wobei die Zuleitungskanäle mit der Mischeinrichtung in Verbindung stehen.

Weiterbildungen der Erfindung sind in den abhängigen Ansprüchen definiert.

Erfindungsgemäß ist somit eine dynamische Mehrkammermischeinrichtung vorgesehen, bei der die zu vermischenden Komponenten mehrere hintereinander geschaltete Mischkammern durchströmen, wobei in die miteinander zu vermischenden Komponenten mittels sich drehender Mischflügel eine Rotationsbewegung eingetragen wird, die sowohl eine Vermischung der Komponenten als auch eine Verzögerung des Mediendurchtritts durch das Mischgehäuse bewirkt. Auf diese Art und Weise wird in einem verhältnismäßig kleinen Mischvolumen eine innige Durchmischung der Komponenten erzielt. Bei dem Stand der Technik der DE 20 2005 000 042 U1, der WO 2007/041878 A1, der DE 20 2007 002 806 U1. der DE 10 2005 054 153 A1 und der DE 100 19 893 C2 ist jeweils nur eine dynamische Einkammermischeinrichtung vorgesehen, in der ein Mischen unter Zuhilfenahme von Mischflügeln stattfindet. Das Mischergebnis ist daher bei diesen Mischeinrichtungen des Standes der Technik nicht so gut wie bei der vorliegenden Erfindung einer dynamischen Mehrkammermischeinrichtung, bei der in jeder Kammer zumindest ein drehbarer Mischflügel angeordnet ist.

Die Mischkammern sind von sich in dem Mischgehäuse mit Abstand zueinander erstreckenden Trennwänden gebildet. Die Mischflügel sind jeweils in den hierdurch gebildeten Mischkammern angeordnet und ermöglichen somit ein Durchmischen in jeder gebildeten Mischkammer.

Bei einer Ausgestaltung der erfindungsgemäßen Mischeinrichtung ist vorgesehen, dass das Mischgehäuse von zumindest einer drehbaren Mischwelle durchsetzt ist, mit welcher die Mischflügel drehfest verbunden sind. Über die Mischwelle kann beispielsweise mit einem extern angeschlossenen Antriebsaggregat eine Rotationsbewegung auf die Mischflügel übertragen werden. Weiter vorteilhaft sind die Trennwände drehfest bezüglich des Mischgehäuses angeordnet, so dass eine Relativbewegung zwischen den Trennwänden und den Mischflügeln vorgesehen werden kann. Eine drehfeste Arretierung der Trennwände in dem Mischgehäuse kann beispielsweise über zumindest eine Feder oder eine andere Arretiereinrichtung im Mischgehäuse und entsprechende Nuten in den Trennwänden bewerkstelligt werden, in die die Arretiereinrichtung bzw. Feder eingreift.

Um eine axiale Durchströmbarkeit der Mischeinrichtung zu gewährleisten, können die Trennwände mit Durchbrüchen versehen sein, die sich in Längsrichtung des Mischgehäuses erstreckende Strömungskanäle bilden. In einer Ausgestaltung können die Durchbrüche der Trennwände als kreisrunde Bohrungen ausgebildet sein.

Die Mischflügel können sich insbesondere jeweils so zwischen den bzw. jeweils zwei Trennwänden erstrecken, dass deren Rotation eine Verwirbelung der Komponenten bzw. Medien quer zu der durch die Strömungskanäle definierten Strömungsrichtung erzeugen.

Das Mischgehäuse kann beispielsweise einen runden bzw. kreisrunden Querschnitt aufweisen. Grundsätzlich sind jedoch auch andere Formgebungen möglich, wobei sich aufgrund der Rotation eine kreisrunde Querschnittsform besonders eignet.

Eine Variante der Mischeinrichtung gemäß der Erfindung zeichnet sich dadurch aus, dass die Mischwelle die Trennwände jeweils etwa mittig durchsetzt. Hierdurch treten bei der Rotation keine Unwuchten auf, die das Mischergebnis negativ beeinflussen könnten.

Vorzugsweise ist mindestens ein mehrere Mischflügel aufweisender Rotor vorgesehen, der drehfest mit der Mischwelle verbunden ist. Für jede der Mischkammern kann beispielsweise ein mit Mischflügeln versehener Rotor vorgesehen sein. Die Höhe der Mischkammern kann so bemessen sein, dass diese nur unwesentlich größer als die Höhe der Mischflügel bemessen ist.

Bei einer Variante der Mischeinrichtung gemäß der Erfindung ist vorgesehen, dass die Austrittsöffnung für das gemischte Medium an einer konischen Stirnseite des Mischgehäuses etwa mittig angeordnet ist. Aufgrund des konisch zulaufenden Mischgehäuses kann der Austrag des gemischten Mediums gerichtet und in einer gewünschten Menge dosiert erfolgen.

Innerhalb des Mischgehäuses im Bereich der Austrittsöffnung können sich in Bezug auf die Austrittsöffnung etwa radial erstreckende Verzögerungsrippen vorgesehen sein, die die von den Mischflügeln eingetragene Medienrotation verzögern bzw. bremsen und somit eine Beruhigung der Mischung vor Austritt aus der Mischeinrichtung erzeugen.

Die Mischflügel weiseneine in Drehrichtung voreilende Anströmfläche auf die entgegen der Bewegungsrichtung der Mischflügel bei der Rotation von diesen abgeschrägt ist. Dies hat sich in Bezug auf die gewünschte Verwirbelung der zu mischenden Komponenten als besonders günstig erwiesen. Dabei können die Mischflügel einen etwa trapezförmigen Querschnitt aufweisen.

Zudem sind die in den verschiedenen Mischkammern vorgesehenen Mischflügel vorteilhaft jeweils in Umfangsrichtung versetzt angeordnet, so dass eine besonders effektive Verwirbelung in der Mischeinrichtung vorgesehen werden kann. Ein Versatz um einen Winkelbetrag von etwa 30° hat sich als vorteilhaft herausgestellt. Durch einen Versatz der Mischflügel in den verschiedenen Mischkammern können die Verwirbelungen in den einzelnen Mischkammern sogar variiert werden.

Besonders zweckmäßig ist es, wenn die Mischeinrichtung gemäß der Erfindung als Einwegartikel ausgebildet ist. Das Mischgehäuse, die Mischwelle, die Rotoren und die Trennwände können beispielsweise alle als Kunststoffteile ausgebildet sein, die lediglich ineinander gesteckt sind.

Die Mischeinrichtung weist ferner vorteilhaft Mittel zum Anschluss einer externen Antriebsvorrichtung auf. Hierzu kann beispielsweise die Mischeinrichtung mit einer aus dem Mischgehäuse herausgeführten Mischwelle versehen sein, die an einem Ende mit einem Innensechskant zur Aufnahme einer entsprechend ausgebildeten Antriebswelle eines Elektromotors ausgestattet ist. Alternativ kann auch eine Kombination aus einem Außensechskant seitens der Mischwelle und einem entsprechend ausgebildeten Innensechskant einer Antriebswelle eines Elektromotors vorgesehen sein oder eine andere geeignete Formgebung von Mischwelle und Antriebswelle eines Elektromotors.

Eine oder die Mischeinrichtung gemäß der vorliegenden Erfindung kann vorteilhaft mit einer mobilen Auspressvorrichtung kombiniert werden.

Wird keine mobile Auspressvorrichtung, sondern eine stationäre Misch- bzw. Dosieranlage vorgesehen, kann bei dieser der bereits erwähnte Mischvorsatz verwendet werden. Bei einem solchen Mischvorsatz ist es möglich, lediglich die Mischeinrichtung auszuwechseln, die als Einweg- bzw. Wegwerfteil konzipiert ist. Ein solcher Wechsel dauert jedoch nur kurze Zeit, so dass die einzuhaltenden Verarbeitungszeiten eingehalten werden können. Der Verlust an Medium, also insbesondere Kleb- oder Dichtstoff, der beim Wegwerfen einer Mischeinrichtung auftritt, beträgt lediglich die Menge, die sich noch in der Mischeinrichtung befindet, also beispielsweise lediglich etwa 50 g. Das im Stand der Technik bekannte Einfrieren oder Spülen der Anlage kann entfallen. Zum Lösen und Auswechseln der Mischeinrichtung ist vorteilhaft zumindest eine Befestigungseinrichtung zum lösbaren Befestigen der Mischeinrichtung an dem Mischvorsatz vorgesehen.

Der Mischvorsatz weist vorteilhaft zumindest einen Anschluss für eine Antriebseinheit, insbesondere einen Elektromotor, zum Antreiben der Mischeinrichtung auf. Eine solche Antriebseinheit kann auch Teil des Mischvorsatzes sein.

Als weiter vorteilhaft erweist es sich, wenn die Mengensteuerventile über einen Hubkolben miteinander wirkverbunden und synchron bewegbar sind. Hierdurch kann wie bei der mobilen Auspressvorrichtung eine genaue Dosierung im vorgegebenen Mengenverhältnis der miteinander zu vermischenden Komponenten erzielt werden.

Als weiter vorteilhaft erweist es sich, wenn die dynamische Mischeinrichtung mit einer Steuerelektronik zum Ändern und/oder Einstellen der Rotationscharakteristik ihrer Mischflügel und/oder ihres Mischgehäuses verbindbar oder verbunden ist. Hierdurch kann über die Steuerelektronik eine entsprechende Einstellung insbesondere der Rotationsgeschwindigkeit in Abhängigkeit von den zu mischenden Medien, der Füllmenge in der Mischeinrichtung sowie weiteren zu berücksichtigenden Eigenschaften der zu mischenden Komponenten bzw. Medien erfolgen.

Somit wird ein System zum Vermischen bzw. Auspressen von viskosen Medien oder Komponenten viskoser Medien geschaffen, das zahlreiche Einrichtungen umfasst, die in beliebiger Kombination miteinander ebenso vorteilhaft eingesetzt werden können wie einzeln. Das System enthält entsprechend zumindest eine Mischeinrichtung wie sie vorstehend beschrieben ist
und/oder zumindest einen Mischvorsatz wie er vorstehend beschrieben ist I

Die Mischeinrichtung kann mit den verschiedensten Einrichtungen und Vorrichtungen kombiniert werden und hierbei eine optimale Durchmischung von zumindest zwei Komponenten bzw. Medien bewirken.

Die Erfindung wird nachstehend anhand von in den Zeichnungen dargestellten Ausführungsbeispielen näher erläutert.

Es zeigen:
- Figur 1: eine perspektivische Ansicht einer ersten Ausführungsform einer Mischeinrichtung gemäß der Erfindung,
- Figur 2: eine um etwa 180 ° geschwenkte perspektivische Ansicht der Mischeinrichtung gemäß Figur 1,
- Figur 3: eine Innenansicht des Mischergehäuses in Richtung des Pfeils III in Figur 2,
- Figur 4: eine Seitenansicht der Mischeinrichtung gemäß Figur 1 ohne Mischgehäuse,
- Figur 5: eine perspektivische Ansicht der in Figur 4 dargestellten Mischeinrichtung,
- Figur 6: eine seitliche teilweise Schnittansicht einer Ausführungsform eines Mischvorsatzes nach der Erfindung und
- Figur 7: eine um 90 ° gedrehte Schnittansicht eines mit zwei Mengensteuerventilen versehenen Teils des Mischvorsatzes,

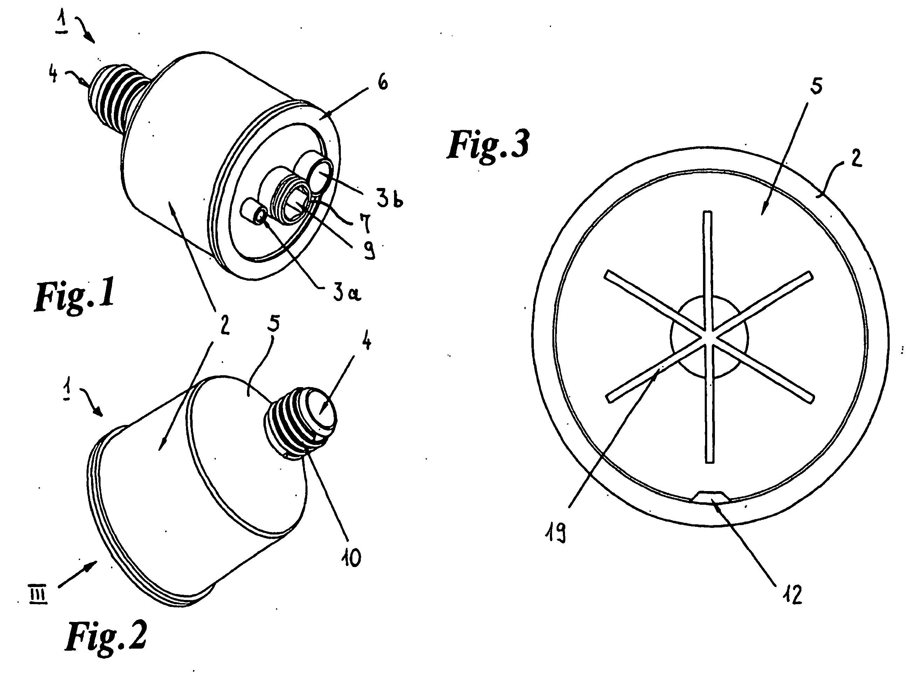

In Figur 1 ist eine Ausführungsform einer Mischeinrichtung 1 in perspektivischer Ansicht gezeigt, die ein etwa zylindrisches Mischgehäuse 2 mit zwei Komponentenanschlüssen 3a, 3b und einer Austrittsöffnung 4 für die miteinander vermischten Komponenten umfasst.

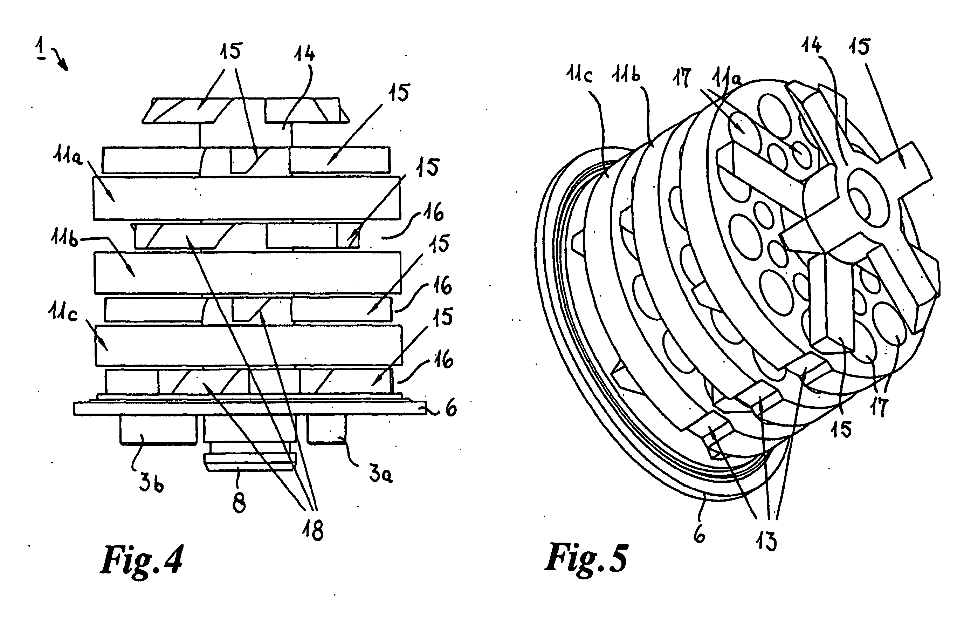

Wie dies ohne Weiteres den Figuren 1 und 2 zu entnehmen ist, sind die Komponentenanschlüsse 3a, 3b, von denen der kleinere beispielsweise für das Zuführen einer Härterkomponente vorgesehen ist und der größere für das Zuführen einer Basiskomponente, an einer Stirnseite des Mischgehäuses 2 vorgesehen, wobei die Austrittsöffnung 4 an der gegenüberliegenden Seite des Mischgehäuses zentral im Bereich einer trichterförmigen Verjüngung 5 des Mischgehäuses 2 vorgesehen ist. An der die beiden Komponentenanschlüsse 3a, 3b umfassenden Stirnseite des Mischgehäuses 2 ist dieses mit einem Verschlussdeckel 6 dichtend verschlossen. In dem Verschlussdeckel 6 sind die Komponentenanschlüsse 3a, 3b und eine Durchführung 7 für eine Mischwelle 8 (in Figur 4 angedeutet) vorgesehen.

Wie dies insbesondere der Figur 1 in Kombination mit der Figur 4 zu entnehmen ist, erstreckt sich die Mischwelle 8 längsmittig durch das Mischgehäuse 2 hindurch und ist an ihrem in Figur 1 sichtbaren aus dem Mischgehäuse 2 herausgeführten Ende an der die beiden Komponentenanschlüsse tragenden Seite mit einem Innensechskant 9 für eine nicht dargestellte Antriebswelle einer nicht dargestellten Antriebseinrichtung versehen.

Die Austrittsöffnung 4 ist halsförmig ausgeprägt und mit einem Außengewinde 10 zur Aufnahme einer Spritztülle oder dergleichen versehen.

Im Folgenden wird Bezug genommen auf die Figuren 4 und 5, die die Mischeinrichtung 1 ohne das Mischgehäuse 2 zeigen.

Die Mischwelle 8 durchsetzt bei dem dargestellten Ausführungsbeispiel insgesamt drei scheibenförmig ausgebildete Trennwände 11 a, 11 b, 11 c, die bezüglich der Mischwelle 8 drehbar und bezüglich des Mischgehäuses 2 drehfest angeordnet sind. Zu diesem Zweck (siehe Figur 3) ist in dem Mischgehäuse 2 eine sich in Längsrichtung erstreckende Feder 12 vorgesehen, die mit umfänglichen Nuten 13 der Trennwände 11a, 11b, 11 c zusammenwirkt. Zwischen den Trennwänden 11 a, 11b, 11c sind jeweils drehfest mit der Mischwelle 8 verbundene Rotoren 14 angeordnet, die jeweils einstückig angeformte Mischflügel 15 aufweisen.

Die Trennwände 11a, 11b, 11 c definieren mit dem Mischgehäuse 2 jeweils Mischkammern 16, die in Erstreckungsrichtung der Mischwelle 8 mediendurchströmt sind. Hierzu kommunizieren die Mischkammern 16 über kreisrunde Durchbrüche 17 in den Trennwänden 11 miteinander. Die Durchbrüche 17 definieren dabei axiale Strömungskanäle, deren Durchströmung jeweils durch die rotierenden Mischflügel 15 gestört wird. Die Mischflügel 15 weisen einen etwa trapezförmigen Querschnitt auf, so dass diese eine in Drehrichtung voreilende abgeschrägte Flanke 18 bilden. Die Rotation der Mischflügel 15 bzw. die Drehbewegung der Rotoren 14 gibt den die Durchbrüche 17 durchströmenden Komponenten eine Rotationsbewegung auf und bewirkt gleichzeitig eine Verzögerung der Komponenten, was zu einer innigen Durchmischung führt. Im Bereich der Austrittsöffnung 4 sind zwei Mischflügelanordnungen übereinander vorgesehen, die entsprechend Figur 5 zueinander versetzt angeordnet sind.

Schließlich sind in der Verjüngung 5 des Mischgehäuses, wie dies der Figur 3 zu entnehmen ist, sternförmig angeordnete Verzögerungsrippen 19 vorgesehen, die die Medienrotation bremsen. Diese Verzögerungsrippen 19 erstrecken sind durch den Querschnitt der Austrittsöffnung 4.

Wie vorstehend bereits erwähnt, bestehen alle Komponenten der Mischeinrichtung 1 aus Kunststoff und sind ineinander gesteckt bzw. ineinander gefügt und werden durch eine Schraube fixiert. Hierdurch ist eine einfache Montierbarkeit und vor allen Dingen auch eine problemlose Entsorgung der erfindungsgemäß als Einwegartikel ausgebildeten Mischeinrichtung möglich.

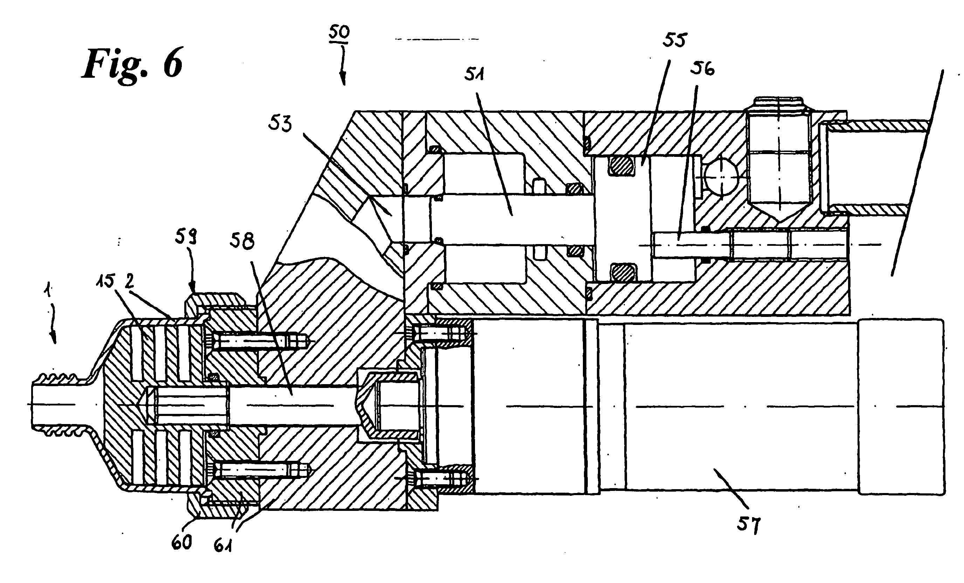

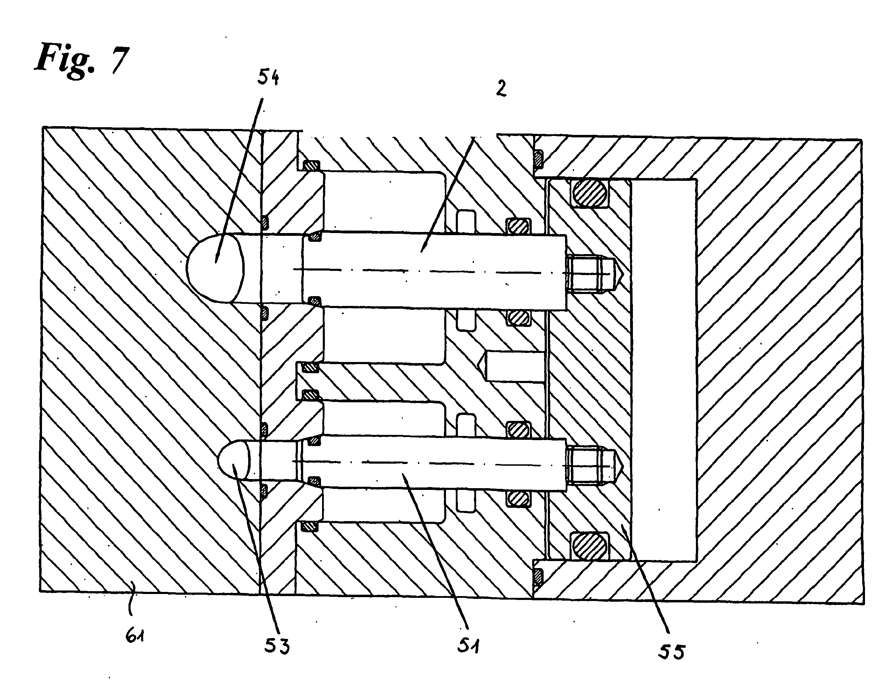

Die Figuren 6 und 7 zeigen einen Mischvorsatz 50 zum dynamischen Vermischen zumindest zweier miteinander zu mischender Komponenten viskoser Medien für eine Hochdruckpump- bzw. misch- und/oder Dosieranlage. Letztere ist allerdings in Figur 6 und 7 nicht gezeigt. Es sind zwei Mengensteuerventile 51, 52 und mit diesen verbundene Zuleitungskanäle 53, 54 sowie zumindest eine dynamische Mischeinrichtung 1 zum gebrauchsfertigen Mischen der Komponenten vorgesehen. Wie Figur 7 zu entnehmen ist, stehen die Zuleitungskanäle 53, 54 mit der Mischeinrichtung 1 in Verbindung.

Die Mengensteuerventile 51, 52 sind über einen Hubkolben 55, insbesondere einen Pneumatikhubkolben, miteinander wirkverbunden und können über diesen synchron bewegt werden. Eine Begrenzung des Hubs ist über eine Anschlagschraube 56 möglich. Hierdurch kann eine Regulierung der Durchflussmenge der beiden Komponenten durch die Mengensteuerventile erfolgen.

Der Mischvorsatz 50 weist zumindest einen Anschluss für eine Antriebseinheit, insbesondere einen Elektromotor 57, zum Antreiben der Mischeinrichtung 1 auf. Die Abtriebswelle 58 des Elektromotors 57 greift dabei wiederum an der Mischwelle 8 der Mischeinrichtung an. Beispielsweise kann eine Vielkantinsbesondere Sechskantwelle, in Kombination mit einer entsprechend ausgebildeten Mischwelle vorgesehen werden, so dass eine gute Kraftübertragung sichergestellt ist.

Der Elektromotor 57 und/oder die dynamische Mischeinrichtung 1 können mit einer Steuerelektronik (nicht gezeigt) zum Ändern und/oder Einstellen der Rotationscharakteristik der Mischflügel 15 und/oder des Mischgehäuses 2 gegenüber den Mischflügeln verbunden werden. Hierdurch ist eine Anpassung an die unterschiedlichen Gegebenheiten verschiedener Dicht- und Klebstoffe möglich.

Der Mischvorsatz 50 weist ferner eine Befestigungseinrichtung 59 zum lösbaren Befestigen der Mischeinrichtung 1 an dem Mischvorsatz auf. Diese ist durch einen abstehenden Rand im Bereich des Verschlussdeckels 6 und eine Manschette 60, die diesen übergreift und an dem Mischvorsatz-Grundkörper 61 festhält, gebildet.

### Bezugszeichenliste

- 1: Mischeinrichtung
- 2: Mischgehäuse
- 3a, 3b: Komponentenanschlüsse
- 4: Austrittsöffnung
- 5: Verjüngung des Mischgehäuses
- 6: Verschlussdeckel
- 7: Durchführung
- 8: Mischwelle
- 9: Innensechskant
- 10: Außengewinde
- 11a, 11b, 11c: Trennwand
- 12: Feder
- 13: Nuten
- 14: Rotoren
- 15: Mischflügel
- 16: Mischkammern
- 17: Durchbrüche
- 18: voreilende Flanke der Mischflügel
- 19: Verzögerungsrippen
- 50: Mischvorsatz
- 51: Mengensteuerventil
- 52: Mengensteuerventil
- 53: Zuleitungskanal
- 54: Zuleitungskanal
- 55: Hubkolben
- 56: Anschlagschraube
- 57: Elektromotor
- 58: Abtriebswelle
- 59: Befestigungseinrichtung
- 60: Manschette
- 61: Mischvorsatz-Grundkörper
- III: Pfeil

## Patentansprüche

1. Mischeinrichtung (1) zum Vermischen mehrerer Komponenten viskoser Medien, umfassend zumindest ein von den Komponenten durchströmbares Mischgehäuse (2) mit zumindest zwei Komponentenanschlüssen (3a, 3b) und mit zumindest einer Austrittsöffnung (4) für die miteinander vermischten Komponenten, **dadurch gekennzeichnet, dass** in dem Mischgehäuse (2) in Strömungsrichtung der Komponenten zumindest zwei hintereinander angeordnete, miteinander kommunzierende Mischkammern (16) vorgesehen sind, in denen jeweils zumindest ein drehbarer Mischflügel (15) angeordnet ist, wobei die Mischkammern (16) von sich in dem Mischgehäuse (2) mit Abstand zueinander erstreckenden Trennwänden (11a, 11b, 11c) mit Durchbrüchen (17), die sich in Längsrichtung des Mischgehäuses (2) erstreckende Strömungskanäle bilden, gebildet sind und die Mischflügel (15) eine in Drehrichtung voreilende Anströmfläche aufweisen, die entgegen der Bewegungsrichtung bei der Rotation von diesen abgeschrägt ist.

2. Mischeinrichtung (1) nach Anspruch 1, **dadurch gekennzeichnet, dass** die Trennwände (11a, 11b, 11c) drehfest bezüglich des Mischgehäuses (2) angeordnet sind.

3. Mischeinrichtung (1) nach einem der Ansprüche 1 oder 2, **dadurch gekennzeichnet, dass** das Mischgehäuse (2) von zumindest einer drehbaren Mischwelle (8) durchsetzt ist, mit welcher die Mischflügel (15) drehfest verbunden sind und/oder dass zumindest ein mehrere Mischflügel (15) aufweisender Rotor (14) vorgesehen ist, der drehfest mit der Mischwelle (8) verbunden ist.

4. Mischeinrichtung (1) nach einem der Ansprüche 1 oder 3, **dadurch gekennzeichnet, dass** die Durchbrüche (17) der Trennwände (11a, 11b, 11 c) als kreisrunde Bohrungen ausgebildet sind.

5. Mischeinrichtung (1) nach einem der Ansprüche 1 bis 4, **dadurch gekennzeichnet, dass** die Mischflügel (15) sich jeweils so zwischen den Trennwänden (11a, 11b, 11c) erstrecken, dass deren Rotation eine Verwirbelung der Komponenten quer zu der durch die Strömungskanäle definierten Strömungsrichtung erzeugen und/oder die in verschiedenen Mischkammern (16) vorgesehenen Mischflügel (15) jeweils in Umfangrichtung versetzt angeordnet sind.

6. Mischeinrichtung (1) nach einem der vorstehenden Ansprüche, **dadurch gekennzeichnet, dass** das Mischgehäuse (2) einen runden Querschnitt aufweist und/oder die Mischwelle (8) die Trennwände (11a, 11b, 11c) jeweils etwa mittig durchsetzt.

7. Mischeinrichtung (1) nach einem der vorstehenden Ansprüche, **dadurch gekennzeichnet, dass** die Austrittsöffnung (4) an einer konischen Stirnseite des Mischgehäuses (2) etwa mittig angeordnet ist und/oder dass innerhalb des Mischgehäuses (2) im Bereich der Austrittsöffnung sich etwa radial erstreckende Verzögerungsrippen (19) vorgesehen sind.

8. Mischeinrichtung (1) nach einem der Ansprüche 1 bis 7 **dadurch gekennzeichnet, dass** die Mischeinrichtung (1) als Einwegartikel ausgebildet ist.

9. Mischvorsatz (50) zum dynamischen Vermischen zumindest zweier miteinander zu mischender Komponenten viskoser Medien für eine Hochdruckpump- und/oder -misch- und/oder Dosieranlage, umfassend eine der Anzahl von Komponenten entsprechende Anzahl von Mengensteuerventilen (51, 52), mit diesen verbundene Zuleitungskanäle (53, 54) sowie zumindest eine dynamische Mischeinrichtung (1) nach einem der Ansprüche 1 bis 8 zum gebrauchsfertigen Mischen der Komponenten, wobei die Zuleitungskanäle (53, 54) mit der Mischeinrichtung (1) in Verbindung stehen.

10. Mischvorsatz (50) nach Anspruch 9, **dadurch gekennzeichnet, dass** zumindest ein Anschluss für eine Antriebseinheit, insbesondere einen Elektromotor (57), zum Antreiben der Mischeinrichtung (1) vorgesehen ist.

11. Mischvorsatz (50) nach Anspruch 9 oder 10, **dadurch gekennzeichnet, dass** zumindest eine Befestigungseinrichtung (59) zum lösbaren Befestigen der Mischeinrichtung (1) an dem Mischvorsatz (50) vorgesehen ist.

12. Mischvorsatz (50) nach einem der Ansprüche 9 bis 11, **dadurch gekennzeichnet, dass** die Mengensteuerventile (51, 52) über einen Hubkolben (55) miteinander wirkverbunden und synchron bewegbar sind.

13. Mischvorsatz (50) nach einem der Ansprüche 9 bis 12, **dadurch gekennzeichnet, dass** die dynamische Mischeinrichtung (1) und/oder die Antriebseinheit (57) mit einer Steuerelektronik zum Ändern und/oder Einstellen der Rotationscharakteristik der Mischflügel (15) und/oder des Mischgehäuses (2) der Mischeinrichtung (1) verbindbar oder verbunden ist.

14. System zum Vermischen bzw. Auspressen von viskosen Medien oder Komponenten viskoser Medien, enthaltend zumindest eine Mischeinrichtung (1) nach einem der Ansprüche 1 bis 8 und/oder zumindest einen Mischvorsatz (50) nach einem der Ansprüche 9 bis 13.

## Claims

1. Mixing device (1) for mixing several components of viscous media consisting of at least one mixer housing (2) through which the media can flow, with at least two component connections (3a, 3b) and with at least one outlet opening (4) for the mixed components, **characterised in that** at least two intercommunicating mixing chambers (16) arranged in succession in the direction of flow of the components are provided in the mixer housing (2), in each of which at least one rotating mixing blade (15) is arranged, where the mixing chambers (16) are formed by dividing walls (11a, 11b, 11c) with openings (17) inside the mixer housing, which extend at a distance from one another in the lengthwise direction of the mixer housing (2) thereby forming flow ducts, and the mixing blades (15) have a flow-impact surface leading in rotation direction which is slanted against the direction of motion when these are rotating.

2. Mixing device (1) according to claim 1, **characterised in that** the dividing walls (11a, 11b, 11c) are arranged non-rotatably with reference to the mixer housing (2).

3. Mixing device (1) according to either of the claims 1 or 2, **characterised in that** the mixer housing (2) is passed through by at least one rotating mixing shaft (8) with which the mixing blades (15) are connected non-rotatably and/or that at least one rotor (14) with several mixing blades (15) is provided, which is connected non-rotatably with the mixing shaft (8).

4. Mixing device (1) according to any of the claims 1 to 3, **characterised in that** the openings (17) in the dividing walls (11a, 11b, 11c) are formed as circular bores.

5. Mixing device (1) according to any of the claims 1 to 4, **characterised in that** each of the mixing blades (15) extends in such a way between the dividing walls (11a, 11b, 11c) that their rotation generates turbulence in the components across the direction of flow defined by the flow ducts and/or the mixing blades (15) provided in the various mixing chambers (16) are arranged offset to one another in the direction of the circumference.

6. Mixing device (1) according to any of the above claims, **characterised in that** the mixer housing (2) has a round cross section and/or the mixing shaft (8) passes through the dividing walls (11a, 11b, 11c) at approximately their centre.

7. Mixing device (1) according to any of the above claims, **characterised in that** the outlet opening (4) in one tapered front side of the mixer housing (2) is arranged approximately centrally and/or that radially extending decelerating ribs (19) are provided inside the mixer housing (2) in the vicinity of the outlet opening.

8. Mixing device (1) according to any of the claims 1 to 7, **characterised in that** the mixing device (1) is formed as a disposable article.

9. Mixing attachment (50) for the dynamic mixing of two components of viscous media for a high-pressure pump and/or a high-pressure mixing and/or portioning system, consisting of a number of quantity-control valves (51, 52) corresponding to the number of components, feeding ducts (53, 54) connected with these, and at least one dynamic mixing device (1) according to any of the claims 1 to 8 for mixing the components in preparation for use, where the feeding ducts (53, 54) are connected to the mixing device (1).

10. Mixing attachment (50) according to claim 9, **characterised in that** at least one connection is provided for a drive unit, in particular for an electric motor (57) to drive the mixing device.

11. Mixing attachment (50) according to claim 9 or claim 10, **characterised in that** at least one attachment device (59) is provided for connecting the mixing device (1) detachably to the mixing attachment (50).

12. Mixing attachment (50) according to any of the claims 9 to 11, **characterised in that** the quantity-control valves (51, 52) are connected with one another via a reciprocating piston (55) for joint operation and are synchronously movable.

13. Mixing attachment (50) according to any of the claims 9 to 12, **characterised in that** the dynamic mixing device (1) and/or the drive unit (57) is or can be connecting with an electronic control system for adjusting and/or setting the rotation characteristics of the mixing blades (15) and/or the housing (2) of the mixing device (1).

14. System for mixing and pressing out viscous media or components of viscous media, comprising at least one mixing device (1) according to any of the claims 1 to 8 and/or at least one mixing attachment (50) according to any of the claims 9 to 13.

## Revendications

1. Appareil de mélange (1) pour mélanger plusieurs composants de matériaux visqueux, comprenant au moins un carter de mélange (2) traversable par les composants, avec au moins deux raccords (3a, 3b) pour composants et avec au moins un orifice de sortie (4) pour les composants mélangés les uns avec les autres, **caractérisé en ce que** dans le carter de mélange (2) dans le sens de l'écoulement des composants au moins deux chambres de mélange (16) sont prévues l'une à la suite de l'autre et communiquant entre elles sont prévues, dans lesquelles est agencé au moins une pale mélangeuse (15) rotative, sachant que les chambres de mélange (16) dans le carter de mélange (2) sont formées par des parois de séparation (11a, 11b, 11c) perforées (17), parois qui forment des canaux d'écoulement dans le sens longitudinal du carter de mélange (2) et que les pales mélangeuses (15) présentent une surface d'afflux en survitesse dans le sens de rotation, surface qui est chanfreinée en sens inverse du mouvement de rotation de cette dernière.

2. Appareil de mélange (1) selon la revendication 1, **caractérisé en ce que** les parois de séparation (11 a, 11 b, 11 c) sont agencées sans tourner par rapport au carter de mélange (2).

3. Appareil de mélange (1) selon l'une des revendications 1 ou 2, **caractérisé en ce que** le carter de mélange (2) est traversé par au moins un arbre mélangeur (8) rotatif avec lequel les pales mélangeuses (15) sont reliées solidaires en rotation et/ou **en ce qu'**est prévu au moins un rotor (14) présentant plusieurs pales mélangeuses (15), rotor qui est relié solidaire en rotation à l'arbre mélangeur (8).

4. Appareil de mélange (1) selon l'une des revendications 1 ou 3, **caractérisé en ce que** les percées (17) des parois de séparation (11a, 11 b, 11 c) sont configurés en alésages circonférentiels.

5. Appareil de mélange (1) selon l'une des revendications 1 à 4, **caractérisé en ce que** les pales mélangeuses (15) s'étendent chaque fois entre les parois de séparation (11a, 11b, 11c), **en ce que** leur rotation fait entrer les composants en turbulence transversalement au sens d'écoulement défini par les canaux d'écoulement et/ou fait entrer en rotation circonférentielle les pales mélangeuses (15) prévues dans les différentes chambres de mélange (16).

6. Appareil de mélange (1) selon l'une des revendications précédentes, **caractérisé en ce que** le carter de mélange (2) présente une section ronde et/ou que l'arbre mélangeur (8) traverse les parois de séparation (11 a, 11b, 11 c) approximativement au milieu de chacune.

7. Appareil de mélange (1) selon l'une des revendications précédentes, **caractérisé en ce que** l'orifice de sortie (4) est agencé approximativement au centre d'un côté frontal conique du carter de mélange (2) et/ou **en ce qu'**à l'intérieur du carter de mélange (2), des nervures de retardement (19) s'étendant de façon approximativement radiale ont été prévues dans la zone de l'orifice de sortie.

8. Appareil de mélange (1) selon l'une des revendications 1 à 7, **caractérisé en ce que** l'appareil de mélange (1) est configuré en article à usage unique.

9. Adaptateur de mélange (50) servant à mélanger dynamiquement entre eux au moins deux composants de matériaux visqueux pour une installation à pompe haute pression et/ou une installation de mélange à pompe haute pression et/ou une installation de dosage, comprenant un nombre de vannes (51, 52) pilotant les quantités qui correspond au nombre de composants, des canaux (53, 54) reliés à ces vannes, ainsi qu'au moins un appareil de mélange (1) dynamique selon l'une des revendications 1 à 8, pour mélanger les composants jusqu'au stade prêt à l'emploi, sachant que les canaux d'amenée (53, 54) sont reliés à l'appareil de mélange (1).

10. Adaptateur de mélange (50) selon la revendication 9, **caractérisé en ce qu'**au moins un raccord pour une unité d'entraînement, en particulier un moteur électrique (57), a été prévu pour entraîner l'appareil de mélange (1).

11. Adaptateur de mélange (50) selon la revendication 9 ou 10, **caractérisé en ce qu'**au moins un dispositif de fixation (59) a été prévu pour fixer de manière détachable l'appareil de mélange (1) contre l'adaptateur de mélange (50).

12. Adaptateur de mélange (50) selon l'une des revendications 9 à 11, **caractérisé en ce que** les vannes pilotant les quantités (51, 52) agissent reliées entre elles via un piston de levage (55) et sont déplaçables en synchronisme.

13. Adaptateur de mélange (50) selon l'une des revendications 9 à 12, **caractérisé en ce que** l'appareil de mélange (1) dynamique et/ou l'unité d'entraînement (57) est/sont reliable(s) ou relié(s) à une électronique de commande pour modifier et/ou régler la caractéristique de rotation des pales mélangeuses (15) et/ou du carter de mélange (2) équipant l'appareil de mélange (1).

14. Système pour mélanger et/ou extruder des matériaux visqueux ou composants de matériaux visqueux, contenant au moins un appareil de mélange (1) selon l'une des revendications 1 à 8 et/ou au moins un adaptateur de mélange (50) selon l'une des revendications 9 à 13.
